# EUROPEAN PATENT SPECIFICATION

(11) **EP 0 860 590 B1**
(45) Date of publication and mention of the grant of the patent: **07.05.2003**
(21) Application number: 97830079.6
(22) Date of filing: 25.02.1997
(51) Int. Cl.: F01N 7/08, F16L 51/02

(54) **A flexible tube with a corrugated wall for uncoupling motor-vehicle exhaust pipes**
Flexibles Wellrohr zur Abgasrohrentkopplung im Kraftfahrzeug
Tuyau ondulé flexible pour désaccoupler les tuyaux d'échappement d'un véhicule motorisé

(43) Date of publication of application: 26.08.1998
(73) Proprietor: FLEXIDER S.r.l., 10156 Torino (IT)
(72) Inventor: Ballone, Tony, 10123 Torino (IT); Capra, Gian Luigi, 10100 Torino (IT); Caricchi, Barbara, 06062 Citta' Della Pieve (IT)
(74) Representative: Plebani, Rinaldo

(56) References cited:
- EP-A- 0 305 891
- DE-A- 3 219 360
- DE-A- 3 424 704
- PATENT ABSTRACTS OF JAPAN vol. 015, no. 290 (M-1139), 23 July 1991 & JP 03 105012 A (SANGO:KK), 1 May 1991,

## Description

The present invention relates to a flexible duct with a corrugated wall for uncoupling motor vehicle exhaust pipes and, more particularly, to a flexible metal duct adapted to be interposed, in use, between the exhaust-gas manifold of a motor-vehicle engine and the catalytic silencer, mounted on the exhaust pipe.

It is known that, in use, motor-vehicle engines are subject to extremely strong vibrations, particularly during sharp accelerations, and the exhaust pipes are in turn subjected to similar vibrations, which act particularly in an axial direction during travel; hence the connection between the exhaust manifold of the engine and the exhaust pipe, which is fixed to the bodywork, requires an intermediate uncoupling element for isolating the engine from the adjacent portion of the exhaust pipe and for limiting the danger of the exhaust pipe breaking.

An uncoupling element is known in the art which is constituted by a flexible sleeve made from sheet steel corrugated to form a bellows; the ends of the sleeve are welded to two collars which, in turn, are welded directly, one to the exhaust manifold of the engine and the other to the catalytic silencer or, more generally, to the exhaust pipe; the sleeve is also provided with an outer protective sleeve or sheath of steel wires or bands, like in JP03105012; this uncoupling element, although providing a good seal against leakage of exhaust gases and having a high axial flexibility, is rather noisy because of the turbulence of the gas flowing through it and has its own critical resonance frequency such that it easily resonates in use with the risk that the sleeve will fracture prematurely due to fatigue. The problem is not solved by the structure shown in EP0305891A1.

The object of the present invention is to provide a flexible uncoupling duct for connecting the exhaust-gas manifold of a motor-vehicle engine to a catalytic silencer mounted on the exhaust pipe, which duct is free from the problems encountered in similar known embodiments and which, as well as providing an effective gas-tight seal for the exhaust gases, makes the exhaust system more reliable and improves comfort within the vehicle.

More particularly, another object of the present invention is to provide a flexible uncoupling duct which has a marked capacity to attenuate vibrations and noise outside and inside the vehicle and has a high resistance to mechanical and thermal stresses while retaining an axial flexibility at least comparable to that found in models currently available in the art.

This object is achieved by the invention, which relates to a flexible duct with a corrugated wall as claimed in claim 1.

According to another aspect of the invention, the flexible tubular element is covered both externally and internally with two respective metal wire sleeves.

These and other characteristics of the invention will become more apparent from the following description of several preferred embodiments, given by way of non-limitative example, with reference to the appended drawings, in which:
Figure 1 is a schematic, partial, longitudinal section taken on the axis of a flexible duct formed in accordance with the present invention;
Figures 2 to 6 show parts of the flexible duct of Figure 1 in section and on an enlarged scale and illustrates various applications of the steel wire sleeve.

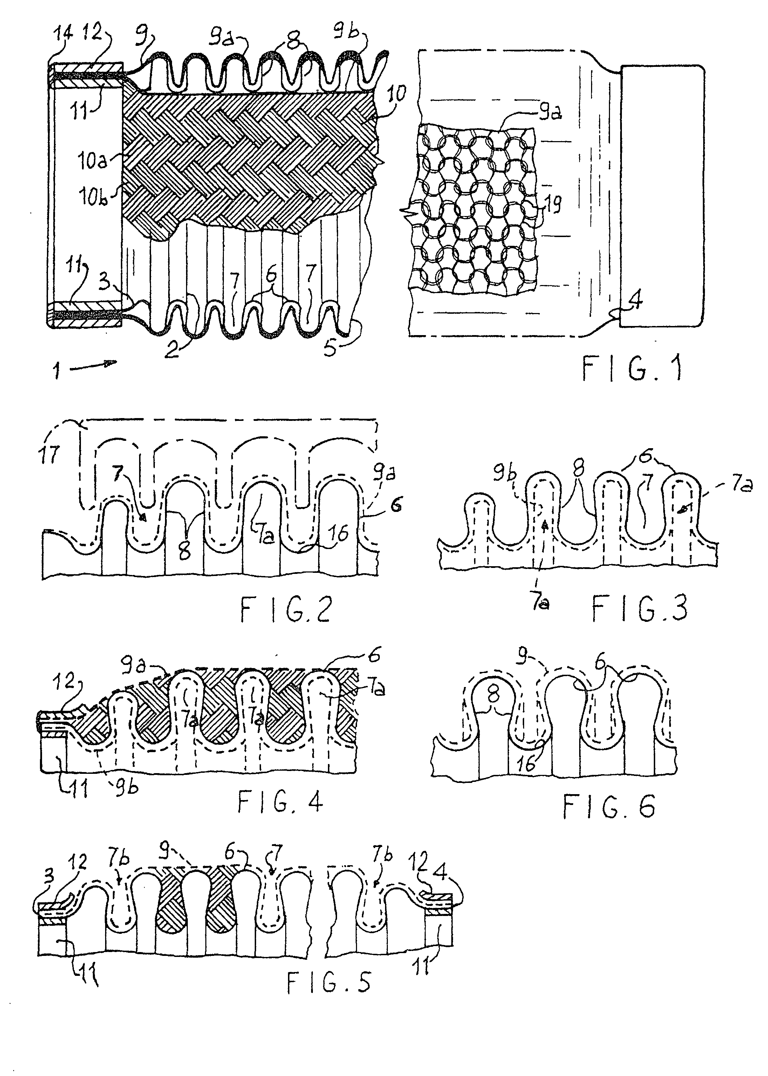

With reference to Figure 1, a flexible duct according to the invention, shown partially sectioned, is indicated 1 and is adapted to be interposed in use between the exhaust manifold of a vehicle engine (for example of a known motor-vehicle) and a catalytic silencer mounted on an exhaust pipe, not shown in the drawings.

The flexible duct 1 is constituted by a corrugated inner tube 2 in the form of a bellows terminating in two cylindrical end portions 3 and 4; the tube 2 may have a single wall, formed from a single strip 5 of metal sheet of adequate thickness, preferably of stainless steel with good resistance to mechanical and thermal fatigue stress, or of the multi-wall type (for example with two walls) formed from several strips 5 of identical thickness or of different thicknesses, as described in EP 779417A in the name of the same Applicant; the/each strip 5 is first folded and welded longitudinally into a cylinder so as to form a single- or multi-walled, continuous, unitary, tubular duct, formed by as many tightly adjacent, concentric ducts as there were starting strips; the tubular single-or multi-walled duct is then hot-deformed, with axial compression, to form a series of circumferential corrugations or ridges 6, intercalated with corresponding circumferential recesses 7 defined by lateral walls 8 which are initially flat and radial.

The tube 2 is covered by at least one tubular sleeve 9, known per se, made from metal wires 10 and having a length approximately equal to the overall length of the corrugated tube 2, the sleeve 9 being deformed locally in correspondence with the two end portions 3 and 4 so as to adhere to the end portions 3 and 4 themselves.

Two annular cylindrical sleeves 11 are inserted into the end portions 3 and 4 of the corrugated tube 2 to form stiffening and reinforcing elements for the end portions 3, 4 of the tube 2 to facilitate its connection to the manifold at one end and to the catalytic silencer at the other.

The radially superposed ends of the annular sleeves 11, the corrugated tube 2 and the wire sleeve 9 are clamped within an outer, cylindrical collar 12, which is heated and force-fitted onto them and welded at the free end with a continuous, circular bead weld 14 so as to obtain a gas-tight seal and prevent gas leakage between the various components.

Such corrugated tubes are extremely flexible, particularly in the axial direction, and hence readily vibrate if subjected to vibrations at their critical resonance frequency, which vibrations, if not suitably damped, may cause the premature fracture of the component due to fatigue in use.

Surprisingly it has been found from experiment that, if, during assembly, the meshes of the wire sleeve 9 are inserted in one, some or all of the recesses 7 defined by the corrugations 6 of the flexible tube 2 so that the meshes are pinched between the opposing walls 8 of at least two adjacent corrugations 6, the resonance frequency of the flexible tube 2 itself is changed, which results in a nett diminution in the vibrations; this gives a nett improvement in the fatigue strength of the duct 1 with respect to the mechanical stresses caused by the strong, continuous vibrations induced by the engine and the cyclically recurrent thermal stresses, with a consequent improvement in the reliability of the exhaust system, in use.

A marked improvement has also been found, both outside and inside the vehicle, in the attenuation of vibrations and noise produced by gases flowing through the flexible duct 1.

These surprising advantages of the finding of the present invention are obtained with various embodiments of the flexible duct 1; Figure 1 relates to a preferred embodiment of the flexible duct 1 in which the outside of the corrugated tube 2, whether single- or multi-walled, is covered by a first wire sleeve 9a which cooperates with the outer peripheral surface of the bellows tube 2 while a second, inner wire sleeve 9b cooperates with the inner peripheral surface of the corrugated tube 2; the outer sleeve 9a is inserted in all the recesses 7 defined by the corrugations 6 and is preferably constituted by a metal sheath knitted from stainless steel wires to form linked meshes 19 shown schematically in the right-hand part of Figure 1; this type of metal sheath, with linked meshes, is extremely flexible as it may readily be bent and stretched in any direction and may be used as a single layer or in multiple layers to increase its damping capacity.

The second, inner sleeve 9b is cylindrical and covers the radially-innermost surfaces of the corrugations 6, being used to covey the exhaust gases which pass through the tube 2.

The second wire sleeve 9b is preferably braided and formed from two groups 10a, 10b of bands, or bundles, of parallel wires alternately interwoven so as to cross each other at an angle of between 90° and 120°, as shown in the left-hand part of Figure 1; the braided sleeve is generally more rigid and compact than the knitted sheath and for this reason is more difficult to bend and will bend to smaller angles.

In Figures 2 and 3 only a single sleeve is used, for example a knitted metal sheath; in Figure 2 the sleeve 9a is arranged outside the tube 2 so as to protect the peripheral outer face thereof and is inserted deeply into all the recesses 7 defined by the corrugations 6, extending substantially to the bottom of each recesses 7; in Figure 3, on the other hand, the sleeve 9b is arranged within the flexible tube 2 so as to protect the inner peripheral surface thereof and is inserted fully into the recesses 7a defined by the inner faces of the corrugations 6, being forced right to the bottom of these recesses.

In Figure 4, two wire sleeves are used simultaneously, an outer one 9a and an inner one 9b; the inner sleeve 9b is of the linked-mesh type and is inserted in all the recesses 7a defined within the corrugations 6 while the outer one 9a is not inserted in any recesses and may be braided or of linked-mesh type with several layers since it has the function of protecting and strengthening the tube 2.

The wire sleeve 9 may alternatively be inserted in only one or in some of the recesses defined by the corrugations 6, either inside or outside as in Figure 5 which, for simplicity, shows its insertion into a central outer recess 7c and into two symmetrical lateral recesses 7b.

Normally the corrugations 6 are formed in the sheet metal 5 in two successive steps: in the first, the corrugations 6 are formed with straight, radially parallel, lateral walls 8 (Figure 2); in the second step, of adjustment, the corrugations 6 are then compressed axially to give the lateral walls 8 a typical omega shape (Figure 6); if the meshes of the wire sleeve 9 are inserted between/in the corrugations 6 in the first step, it is possible to make them penetrate the recesses 7 (or 7a) fully, until they are very close to their buses 16, (Figures 2 to 6); in this position the meshes of the wire sleeve which penetrate the outer recesses 7 or inner recesses 7a remain firmly pinched therein after the adjustment step.

The meshes of the sleeve 9 are inserted in the recesses 7, 7a defined by the corrugations 6 by means of internal or external comb-like bladed tools 17 (shown in chain line in Figure 2), or by rollers which are urged against the flexible tube 2 in correspondence with the recesses 7, 7a.

The advantages obtained by the present invention have been shown by a comparison of one example of a flexible duct according to the invention with another example taken from the prior art, in which the outer surface of the corrugated duct is covered by a knitted metal sheath not inserted between the corrugations themselves, the duct of the invention giving decidedly better results in terms of dynamic performance and fatigue strength in all tests.

## Claims

1. A flexible duct (1) with a corrugate wall for decoupling exhaust pipes in a vehicle engine, comprising a flexible tubular element (2) made from at least one metal sheet (5) deformed so as to form said flexible tubular element (2) in the shape of a bellows by the creation of a series of adjacent corrugations (6) therein; and at least one sleeve (9; 9a; 9b) of interlaced wires covering a peripheral surface of the tubular element (2); the corrugations (6) defining with their respective side walls (8) a plurality of circumferential recesses (7,7a) facing the interlaced wire sleeve, **characterized in that**
- said corrugations (6) have an omega-shaped profile in radial section defined by said side walls (8), which are inclined;
- the at least one wire sleeve (9; 9a; 9b) having meshes penetrating fully in at least one of the circumferential recesses (7,7a) defined by the side walls (8) of the corrugations (6) of the tubular element (2);
- said meshes of said at least one wire sleeve (9; 9a; 9b) having been inserted fully into said at least one of the circumferential recesses (7) before to impart said omega-shaped profile to the corrugations (6) by compressing them axially, so as that said meshes remain firmly pinched in said at least one of the recesses (7,7a).

2. A flexible duct (1) according to Claim 1, wherein said at least one wire sleeve is located outside the tubular element (2), being an outer wire sleeve (9a) covering the outer peripheral surface of the tubular element(2).

3. A flexible duct (1) according to claim 2, wherein said outer wire sleeve (9a) penetrates fully in several recesses (7c, 7b) defined by the corrugations (6) on the outer peripheral surface of the tubular element (2) so as to be pinched within them.

4. A flexible duct (1) according to claim 2, wherein said outer wire sleeve (9a) penetrates fully in all recesses (7) defined by the corrugations (6) on the outer peripheral surface of the tubular element (2) so as to be pinched within them.

5. A flexible duct (1) according to Claim 1, wherein said at least one wire sleeve is located within the tubular element (2), being an inner wire sleeve (9b) covering the inner peripheral surface of the tubular element(2).

6. A flexible duct (1) according to claim 5, wherein said inner wire sleeve (9b) penetrates fully in several recesses (7c, 7b) defined by the corrugations (6) on the inner peripheral surface of the tubular element (2) so as to be pinched within them.

7. A flexible duct (1) according to claim 5, wherein said inner wire sleeve (9b) penetrates fully in all recesses (7) defined by the corrugations (6) on the inner peripheral surface of the tubular element (2) so as to be pinched within them.

8. A flexible duct (1) according to anyone of the preceding claims, wherein it includes both an inner wire sleeve and an outer wire sleeve, at least one of them penetrating fully in several or all recesses (7) defined by the corrugations (6) of the tubular element (2) so as to be pinched within them.

9. A flexible duct (1) according to anyone of the preceding claims, wherein said at least one wire sleeve (9; 9a; 9b) is formed from bands (10a; 10b) of parallel wires interwoven so as to cross each other alternately.

10. A flexible duct (1) according to anyone of the preceding claims, wherein said at least one wire sleeve (9; 9a; 9b) is made by interlacing the wires to form linked meshes (19).

## Patentansprüche

1. Flexible Röhrenleitung (1) mit einer gerieften Wand zum Entkoppeln von Abgasleitungen in einem Fahrzeugmotor, die ein flexibles röhrenförmiges Element (2) umfasst, das aus zumindest einer Blechplatte (5) hergestellt ist, die deformiert ist, um so das flexible röhrenförmige Element (2) in der Form eines Balgs durch das Schaffen einer Reihe von angrenzenden Riefen (6) darin zu bilden, und zumindest eine Muffe (9; 9a; 9b) aus verflochtenen Drähten, die eine periphere Oberfläche des röhrenförmigen Elements (2) abdeckt; wobei die Riefen (6) mit ihren jeweiligen Seitenwänden (8) eine Vielzahl von umfänglichen Aussparungen (7, 7a) definieren, die der verflochtenen Drahtmuffe gegenüberliegen, **dadurch gekennzeichnet, dass**
- die Riefen (6) ein Omega-förmiges Profil im Radialschnitt aufweisen, das durch die Seitenwände (8) definiert ist, welche geneigt sind;
- die zumindest eine Drahtmuffe (9; 9a; 9b) Maschen aufweist, die vollständig in zumindest eine der umfänglichen Aussparungen (7, 7a) eindringen, die durch die Seitenwände (8) der Riefen (6) des röhrenförmigen Elements (2) definiert sind;
- die Maschen der zumindest einen Drahtmuffe (9; 9a; 9b) vollständig in zumindest eine der umfänglichen Aussparungen (7) vor dem Verleihen des Omega-förmigen Profils an die Riefen (6) durch ihr axiales Komprimieren eingeführt worden sind, so dass die Maschen fest in zumindest einer der Aussparungen (7, 7a) geklemmt verbleiben.

2. Flexible Röhrenteitung (1) gemäß Anspruch 1, wobei die zumindest eine Drahtmuffe, welche eine äußere Drahtmuffe (9a) ist, die die äußere periphere Oberfläche des röhrenförmigen Elements (2) abdeckt, außerhalb des röhrenförmigen Elemente (2) platziert ist.

3. Flexible Röhrenleitung (1) gemäß Anspruch 2, wobei die äußere Drahtmuffe (9a) vollständig in mehrere Aussparungen (7c, 7b) eindringt, die durch die Riefen (6) auf der äußeren peripheren Oberfläche des röhrenförmigen Elements (2) definiert sind, um so zwischen ihnen geklemmt zu sein.

4. Flexible Röhrenleitung (1) gemäß Anspruch 2, wobei die äußere Drahtmuffe (9a) vollständig in alle Aussparungen (7) eindringt, die durch die Riefen (6) auf der äußeren peripheren Oberfläche des röhrenförmigen Elements (2) definiert sind, um so zwischen ihnen geklemmt zu sein.

5. Flexible Röhrenleitung (1) gemäß Anspruch 1, wobei zumindest eine Drahtmuffe, welche eine innere Drahtmuffe (9b) ist, die die innere periphere Oberfläche des röhrenförmigen Elements (2) abdeckt, innerhalb des röhrenförmigen Elements (2) platziert ist.

6. Flexible Röhrenleitung (1) gemäß Anspruch 5, wobei die innere Drahtmuffe (9b) vollständig in verschiedene Aussparungen (7c, 7b) eindringt, die durch die Riefen (6) auf der inneren peripheren Oberfläche des röhrenförmigen Elements (2) definiert sind, um so zwischen ihnen geklemmt zu sein.

7. Flexible Röhrenleitung (1) gemäß Anspruch 5, wobei die innere Drahtmuffe (9b) vollständig in alle Aussparungen (7) eindringt, die durch die Riefen (6) auf der inneren peripheren Oberfläche des röhrenförmigen Elements (2) definiert sind, um so zwischen ihnen geklemmt zu sein.

8. Flexible Röhrenleitung (1) gemäß irgendeinem der vorhergehenden Ansprüche, wobei sie sowohl eine innere Drahtmuffe als auch eine äußere Drahtmuffe enthält, wobei zumindest eine von ihnen vollständig in mehrere oder alle Aussparungen (7) eindringt, die durch die Riefen (6) des röhrenförmigen Elements (2) definiert sind, um so zwischen ihnen geklemmt zu sein.

9. Flexible Röhrenleitung (1) gemäß irgendeinem der vorhergehenden Ansprüche, wobei die zumindest eine Drahtmuffe (9; 9a; 9b) aus Bändern (10a; 10b) von parallelen Drähten gebildet ist, die so verflochten sind, um sich so abwechselnd zu überkreuzen.

10. Flexible Röhrenleitung (1) gemäß irgendeinem der vorhergehenden Ansprüche, wobei die zumindest eine Drahtmuffe (9; 9a; 9b) durch Verflechten der Drähte hergestellt ist, um verbundene Maschen (19) zu bilden.

## Revendications

1. Tuyau flexible (1) avec une paroi ondulée pour désaccoupler des tuyaux d'échappement dans un moteur de véhicule, comprenant un élément tubulaire flexible (2) fabriqué à partir d'au moins une feuille métallique (5) déformée pour donner audit élément tubulaire flexible (2) la forme de soufflets en créant une série de cannelures (6) adjacentes dans celui-ci ; et au moins un manchon (9 ; 9a ; 9b) de fils entrelacés recouvrant une surface périphérique de l'élément tubulaire (2); les cannelures (6) définissant avec leurs parois latérales (8) respectives une pluralité de cavités circonférentielles (7, 7a) situées en face du manchon de fils entrelacés, **caractérisé en ce que**
- lesdites cannelures (6) présentent un profil en forme d'oméga suivant leur section radiale définie par lesdites parois latérales (8), qui sont inclinées ;
- le au moins un manchon de fils (9; 9a; 9b) ayant des mailles pénétrant entièrement dans au moins une des cavités circonférentielles (7, 7a) définie par les parois latérales (8) des cannelures (6) de l'élément tabulaire (2) ;
- lesdites mailles dudit au moins un manchon de fils (9; 9a ; 9b) ayant été insérées entièrement dans ladite au moins une des cavités circonférentielles (7) avant de donner ledit profil en forme d'oméga aux cannelures (6) en les comprimant dans la direction axiale, de telle sorte que lesdites mailles restent fermement serrées dans ladite au moins une des cavités (7, 7a).

2. Tuyau flexible (1) selon la revendication 1, dans lequel ledit au moins un manchon de fils est situé à l'extérieur de l'élément tubulaire (2), formant un manchon de fils extérieur (9a) recouvrant la surface périphérique externe de l'élément tubulaire (2).

3. Tuyau flexible (1) selon la revendication 2, dans lequel ledit manchon de fils extérieur (9a) pénètre entièrement dans plusieurs cavités (7c, 7b) définies par les cannelures (6) sur la surface périphérique externe de l'élément tubulaire (2) de manière à être serré à l'intérieur de celles-ci.

4. Tuyau flexible (1) selon la revendication 2, dans lequel ledit manchon de fils extérieur (9a) pénètre entièrement dans toutes les cavités (7) définies par les cannelures (6) sur la surface périphérique externe de l'élément tubulaire (2) de manière à être serré à l'intérieur de celles-ci.

5. Tuyau flexible (1) selon la revendication 1, dans lequel ledit au moins un manchon de fils est situé à l'intérieur de l'élément tubulaire (2), formant un manchon de fils intérieur (9b) recouvrant la surface périphérique interne de l'élément tubulaire (2) ;

6. Tuyau flexible (1) selon la revendication 5, dans lequel ledit manchon de fils intérieur (9b) pénètre entièrement dans plusieurs cavités (7c, 7b) définies par les cannelures (6) sur la surface périphérique intérieure de l'élément tubulaire (2) de manière à être serré à l'intérieur de celles-ci.

7. Tuyau flexible (1) selon la revendication 5, dans lequel ledit manchon de fils intérieur (9b) pénètre entièrement dans toutes les cavités (7) définies par les cannelures (6) sur la surface périphérique intérieure de l'élément tubulaire (2) de manière à être serré à l'intérieur de celles-ci.

8. Tuyau flexible (1) selon l'une quelconque des revendications précédentes, dans lequel sont inclus à la fois un manchon de fils intérieur et un manchon de fils extérieur, au moins un d'entre eux pénétrant entièrement dans plusieurs ou toutes les cavités (7) définies par les cannelures (6) de l'élément tubulaire (2) de manière à être serré à l'intérieur de celles-ci.

9. Tuyau flexible (1) selon l'une quelconque des revendications précédentes, dans lequel ledit au moins un manchon de fils (9 ; 9a ; 9b) est formé à partir de bandes (10a ; 10b) de fils parallèles entretissés de telle sorte qu'ils se croisent alternativement.

10. Tuyau flexible (1) selon l'une quelconque des revendications précédentes, dans lequel ledit au moins un manchon de fils (9 ; 9a ; 9b) est fabriqué en entrelaçant les fils pour former des mailles liées (19).
